Europäisches Patentamt

European Patent Office

Office européen des brevets

(19)

(11) Veröffentlichungsnummer: **0 198 347**
**B1**

(12)                            **EUROPÄISCHE PATENTSCHRIFT**

(45) Veröffentlichungstag der Patentschrift: **16.05.90**

(51) Int. Cl.⁵: **G 11 B 23/023**

(21) Anmeldenummer: **86104582.1**

(22) Anmeldetag: **04.04.86**

(54) Etui zur Aufnahme einer Magnetbandcassette.

(30) Priorität: **13.04.85 DE 3513263**

(43) Veröffentlichungstag der Anmeldung:
**22.10.86 Patentblatt 86/43**

(45) Bekanntmachung des Hinweises auf die
Patenterteilung:
**16.05.90 Patentblatt 90/20**

(84) Benannte Vertragsstaaten:
**DE FR GB IT NL**

(56) Entgegenhaltungen:
**DE-A-3 129 559**
**DE-A-3 149 559**
**DE-U-8 531 274**

(73) Patentinhaber: **Agfa-Gevaert AG**
**D-5090 Leverkusen 1 (DE)**

(72) Erfinder: **Brunner, Hubert**
**Muehlgasse 4a**
**D-8911 Weil (DE)**

EP 0 198 347 B1

Courier Press, Leamington Spa, England.

## Beschreibung

Die Erfindung betrifft ein aufklappbares Etui zur Aufnahme einer Magnetbandcassette, mit den Merkmalen des Oberbegriffs des Anspruchs 1.

Beim Aufklappen des Etuis kann der taschenförmige Deckel, in dem die Cassette steckt, über 180° hinausgeschwenkt werden. Bei dieser Handhabung kann die Cassette herausfallen. Um dies zu vermeiden, ist es bereits bekannt, die versetzten Querwände mit je einer kurvenförmigen Nut zu versehen, in der die sonst übliche Noppe des Gelenkes an den korrespondierenden äußeren Seitenwänden gleitet und am Ende in einem Loch einrastet. Dies ermöglicht, den Etuideckel ca. 90° zu schwenken, obwohl eine Schwenkung um etwa 180° wünschenswert wäre. In der DE—B—23 66 195 wird dies erzielt, indem in den äußeren Seitenwänden des Unterteils eine nach innen verlaufende Nut vorhanden ist, die im gleichen Abstand zum Schwenkzapfen angeordnet ist wie der Zapfen vom freien Ende der Seitenwand. An den verkürzten Querwänden des Deckels sitzen entsprechend ausgebildete Rippen. Letztere verhindern ein Herunterfallen des Deckels. Die äußeren Seitenwände haben aufgrund ihrer geringen Steifigkeit eine gewisse Federwirkung, so daß diese beim Aufschwenken des Deckels von den keilförmigen Rippen, die einen relativ geringen Widerstand bieten, auseinandergedrückt werden und der Deckel durch das Gewicht der Cassette über 180° verdreht wird, so daß die Cassette trotz der Vorbeugungsmaßnahmen entfallen kann. Die Rippen sollen ferner bei geschlossenen Etui die Funktion der Arretierung des Deckels im Unterteil übernehmen. Dies wird damit nur unzureichend erzielt, da die Einschnappvorrichtung zu nahe am Drehpunkt des Scharniergelenks liegt. Durch den dadurch entstehenden relativ großen Hebelarm zwischen Drehpunkt und Deckel kann sich letzterer bei verschiedenen Lagen selbsttätig öffnen.

Ferner ist in der DE—U—19 52 854 ein Behälter für Tonbandbandspulen beschrieben, der sich mit einer Schwenkung des Deckels nur um 90° öffnen läßt, in dem die Ecken der vorderen Seitenwände nahe des Bodens Aussparungen aufweisen, an dem die Längsvorsprünge des Deckels anliegen.

In der DE—A—31 29 559 die den Ausgangspunkt des Anspruchs 1 bildet, ist ein Etui beschrieben, bei dem sowohl um die Gelenkzapfen wie um die die Gelenkzapfen aufnehmenden Löcher bogenförmige Vorsprünge vorgesehen sind, die nicht miteinander überlappen. Zweck dieser Anordnung ist einerseits, die einander gegenüberliegenden Seitenwände von Boden und Deckelteil in Abstand voneinander zu halten und andererseits den Öffnungswinkel des Deckels zu begrenzen. Eine Arretierung ist mit dieser Anordnung jedoch nicht vorgesehen.

Gemäß der DE—C—3 149 559 wird eine bei 180° arretierbares Etui dadurch geschaffen, daß der Abstand vom Drehpunkt des Gelenkzapfens bis zur Vorderkante des Bodens des Unterteils gleich ist mit dem Abstand des Drehpunktes des Gelenkzapfens zur rückseitigen Deckelwand und der Drehpunk bezogen auf die Höhe des Etuis, geringfügig aus der Mitte in Richtung des Bodens des Unterteils verschoben ist, so daß beim Aufklappen des Deckels um 180° die rückseitige Deckelwand an der Vorderkante des Bodens des Unterteils anschlägt und daß die Außenkante der rückseitigen Deckelwand sowie die Vorderkante des Bodens des Unterteils zueinander abgeschrägt sind. Um eine schwenkwinkelabhängige Zwangsverriegelung von Boden- und Deckelteil zu schaffen, ist nach der Lehre der DE—U—83 32 322 an einer Seitenwand ein Verriegelungsteil, bestehend aus einem Ringrand mit einer Hohlnut vorgesehen und an der zugeordneten Seitenwand ist eine zweites in die Hohlnut eingreifendes Verriegelungsteil angeordnet. Durch diese konstruktion wird zwar eine gute Funktionsfähigkeit erreicht, jedoch sind Herstellung und Montage eines solchen Behälters schwierig zu bewerkstelligen. Außerdem sind in einer bevorzugten Ausführung die Enden der Bodenteil-Seitenwände halbkreisförmig ausgebildet, wodurch ein von der üblichen Form der Compact-Cassette abweichendes äußeres Design entsteht.

Der Erfindung liegt die Aufgabe zugrunde, eine einfache, preiswerte und gleichzeitig sichere Arretierung des Deckelteils sowhol in geschlossenem wie auch in 180° geöffnetem Zustand des Aufbewahrungsbehälters zu erreichen.

Erfindungsgemäß wird diese Aufgabe gelöst durch die Merkmale des kennzeichnenden Teiles des Anspruchs 1.

Einzelheiten der Erfindung sind den Unteransprüchen, der Beschreibung und den Zeichnungen zu entnehmen.

Durch die Erfindung wird erreicht, daß sowohl im geschlossenen wie im offenen Zustand des Etuis nach einer Schwenkbewegung des Deckels um ca. 180° je 4 in der Hohlnut bzw. der Erhöhung angeordnete Stufen in Klemmstellung arretierbar aneinanderstoßen.

Nachstehend ist die Erfindung unter Bezugnahme auf die Zeichnungen näher erläutert, und zwar stellt

Fig. 1 eine perspektivische Darstellung eines Aufbewahrungsbehälters, bei welchem die beiden Hälften des Behälters voneinander getrennt sind

Fig. 2 eine perspektivische vergrößerte Ansicht eines Teils des Unterteils (Fig. 2a) sowie des Deckelteils (Fig. 2b) und des in 180° Offenstellung zusammengesteckten Unter- und Deckelteils (Fig. 2c)

Fig. 3 einen Schnitt längs der Linie III von Fig. 2a

Fig. 4 einen Schnitt längs der Linie IV von Fig. 2a, und zwar bei zusammengestecktem Unter- und Deckelteil des Etuis in Arretierstellung

Fig. 5 eine Draufsicht (5a) und einen Querschnitt (5b) einer besonderen Ausführungsform des die Löcher enthaltenden Seitenteils dar.

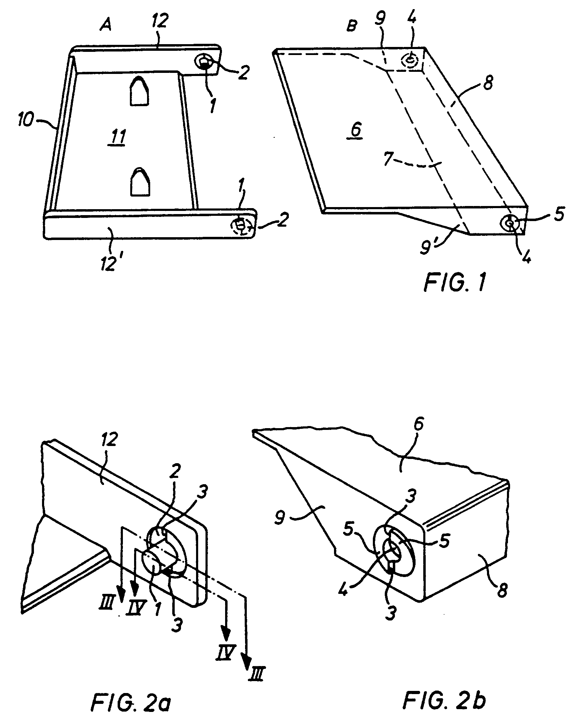

Der Aufbewahrungsbehälter, vorzugsweise aus Kunststoff bestehend, enthält nach Fig. 1 zwei Teile A und B. Der Teil A ist der Unterteil und der Teil B ist der taschenartige Deckelteil. Der Deckelteil besteht aus der Deckelwandung 6, einer zungenförmigen Wandung 7 im Abstand von und parallel zu der Deckelwandung 6, einer rückseitigen Deckelwand 8 und Deckelseitenwänden 9 und 9'. Der Teil A, der Unterteil des Aufbewahrungsbehälters, hat drei nach oben ragende Seitenwände, eine Stirnwand 10 und einen Boden 11, welcher ausgeschnitten ist, so daß die Wandung 7 des Deckels in dem Ausschnitt und so in der Ebene des Bodens 11 liegt, wenn der Behälter geschlossen ist. Die Wandung 7 des Deckels B wird somit eine Teil der Bodenwandung des Behälters, wenn dieser geschlossen ist.

Der Teil A und der Teil B sind gelenkig miteinander verbunden mittels Schwenkzapfen 1, die an den über den Boden hinausragenden Teilen der Seitenwände 12 und 12' gebildet sind, un Löchern 4, die in den Seitenwänden 9 gebildet sind und die Schwenkzapfen 1 aufnehmen.

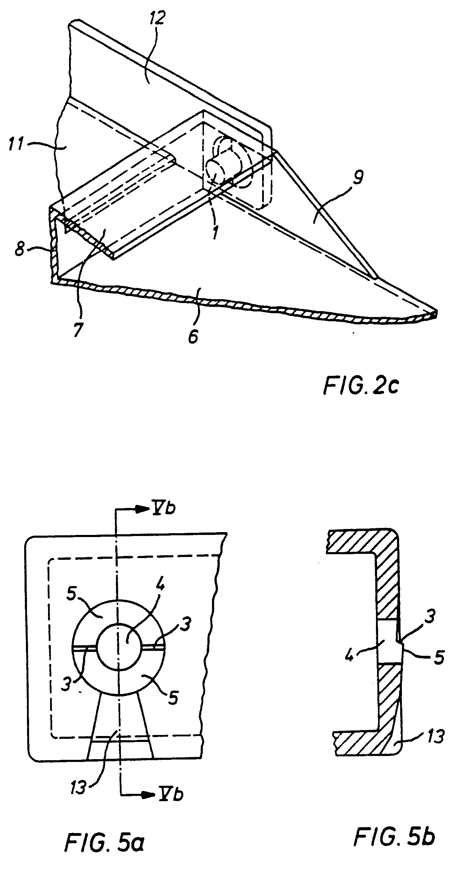

Wie in Fig. 2a dargestellt, ist erfindungsgemäß konzentrisch um jeden Schwenkzapfen 1 eine Hohlnut 2 mit einer Breite, die etwa dem Durchmesser des Schwenkzapfens 1 entspricht, vorhanden. Diese Hohlnut 2 ist nun in der Art des Kopfes einer Kreuzschlitzschraube mit einwegentrieb ausgebildet, indem sie jeweils axial halbkreisförmig in Keilform in Drehrichtung ansteigt und, wenn sie das Niveau der Innenseite der Seitenwand 12 erreicht hat, in einer Stufe 3 abfällt, um dann wieder wie oben beschrieben anzusteigen und abermals stufenförmig abzufallen. Auf diese Weise weist die Hohlnut 2 zwei um 180° versetzte in gleicher Richtung verlaufende Stufen 3 auf, die eine Tiefe von etwa der halben Dicke der Seitenwand 12 besitzten.

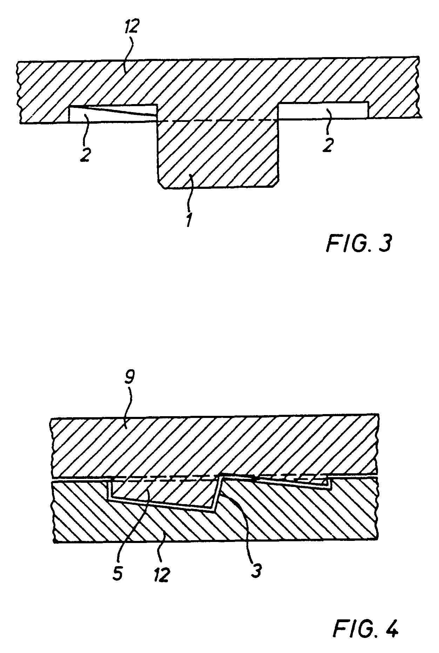

Zur Verdeutlichung ist in Fig. 3 ein Schnitt in einer Ebene senkrecht zur Seitenwand 12 längs der Linie III (Fig. 2a) gezeichnet. Selbstverständlich kann die keilförmige Steigung der Hohlnut 2 und der Abfall der Stufe 3 auch in umgekehrter Richtung erfolgen.

Konzentrisch um die Löcher 4 des Deckelteils B (Fig. 2b) sind komplementär zu den Hohlnuten 2 halbkreisförmig axial in Drehrichtung abfallende und in einer Stufe 3 ansteigende Erhöhungen 5 angeordnet, so daß ebenfalls zwei um 180° versetzte Gegenüberliegende in gleicher Richtung verlaufende Stufen ausgebildet sind. Die Erhöhungen 5 sind bezüglich Dimensionierung der Breite und Stufentiefe gleich don Hohlnuten 2.

Durch die geschilderte Ausgestaltung des erfindungsgemäßen Etuis wird erreicht, daß sowohl in Schließstellung wie in der 180° Offenstellung der Cassette (letzteres ist in Fig. 2C dargestellt) die einander zugeordneten Stufen der Hohlnuten 2 und der Erhöhungen 5 klinkenartig ineinandergreifen und so eine arretierbare Klemmvorrichtung bilden. Dies ist in Fig. 4 dargestellt, welche einen Schnitt in einer Ebene senkrecht zu den Seitenwänden 9 bzw. 12 entlang der Linie IV von Fig. 2 a bei zusammengesetztem Unterund Deckelteil zeigt. Damit das Etui ohne größere Kraftaufwendung geöffnet werden kann, sind die Stufen 3 nicht senkrecht zur Seitenwand, sondern leicht abgeschrägt ausgebildet, wie ebenfalls in Fig. 4 dargestellt. Der Winkel der Schräge kann 5—40° betragen, in einer bevorzugten Ausführung beträgt er 15° gegen die Senkrechte zur Seitenwand 9 bzw. 12.

Die Erfindung ist nicht auf die geschilderte Ausführung beschränkt, vielmehr sind auch andere Ausführungsformen denkbar, beispielsweise kann die konzentrische hohlnut ebenso um die die Gelenkzapfen aufnehmenden Löcher ausgebildet seine, umgekehrt kann die konzentrische Erhöhung auch um die Gelenkzapfen 1 angeordnet sein. Ferner können die Gelenkzapfen an den Seitenwänden des Deckelteils und umgekehrt die Löcher an den Seitenwänden des Unterteils sitzen. Ebenso kann die Orientierung der Stufen 3 von Deckelteil und Unterteil beliebig sein und ist nicht auf die in den Figuren 2a und 2b gezeichnete Position parallel zur Schmalseite der Seitenwände 9 bzw. 12 beschränkt.

Schließlich kann auch in dem Etui-Seitenteil, in dem die zur Aufnahme der Gelenkzapfen 1 bestimmten Löcher 4 sitzen, eine in Fig. 5a und 5b in Draufsicht und Querschnitt eingezeichnete, von der Außenkante nach innen schräg verlaufende Nut 13 vorhanden sein, die bei der Montage als an sich bekannte Einführschräge für die Gelenkzapfen das Zusammensetzen des Unter- und Deckelteils erleichtert. Wie aus Fig. 5b hervorgeht, wird in diesem Fall zweckmäßigerweise die rings um die Löcher 4 konzentrisch verlaufende Erhöhung 5 so ausgebildet, daß an der Stelle, an der die Nut 13 auf die Erhöhung 5 trifft, gerade das Niveau der Außenseite des Seitenteils erreicht ist. Entsprechend muß auch die rings um die Gelenkzapfen 1 verlaufende Hohlnut 2 im Niveau dem Verlauf der Erhöhung 5 angepaßt werden.

Die Vorteile des erfindungsgemäßen Etuis gegenüber den bekannten Ausführungen sind wie folgt:

Da die Anschlagflächen, d.h. die abgeschrägten Stufen symmetrisch und unmittelbar benachbart zu den Gelenkzapfen als Drehpunkte angeordnet sind, üben sie einerseits keine Scherwirkung auf die Gelenkzapfen aus und erfordern andererseits wegen des kurzen Lastarms eine relativ hohe Kraftaufwendung zur Überwindung der Sperrwirkung.

Wegen der erfindungsgemäß bewirkten arretierbaren Schließvorrichtung des Etuis können die bisher üblichen Verschlußnoppen am Unterteil und die entsprechenden Hinterschneidungen am Deckelteil wegfallen, welche bei der Fertigung Probleme bereiten sowie Verkratzungen beim häufigen Auf- und Zuklappen zur Folge haben.

Bei all diesen Vorteilen ist das erfindungsgemäße Etui einfach und kostengünstig zu fertigen und problemlos zu montieren.

**Patentansprüche**

1. Ein aufklappbares Etui für eine Magnetband-Cassette, insbesondere eine Compact-Cassette, bestehend aus einem offenen Unterteil (A) mit zwei Seitenwänden (12, 12') und einer Stirnwand (10) und mit einem Boden (11), der sich nur über einen Teil der Länge der Seitenwand erstreckt, so daß die Seitenwände frei über den Boden hinausragen sowie aus einem Oberteil (B) in Gestalt eines taschenförmigen Deckels, dessen Wandungsteile (6, 7, 8, 9, 9') so ausgebildet sind, daß sie zusammen mit den entsprechenden Wandungen des Unterteils eine geschlossenes Gehäuse bilden, und einem Scharnier zwischen dem Unterteil und dem Deckel in Gestalt von zwei einander gegenüberliegenden Schwenkzapfen (1) an der Innenseite der frei über den Boden hinausragenden Teile der Seitenwände des Unterteils und von Löchern (4) zur Aufnahme der Schwenkzapfen in den zugeordneten Seitenwänden des Deckels wobei konzentrisch um beide Schwenkzapfen (1) je ein erster Teile und konzentrisch um beide Löcher (4) je ein zweiter Teil angebracht ist, deren Zusammenwirken den Öffnungswinkel des Deckels begrenzt, dadurch gekennzeichnet, daß der erste Teil als eine Hohlnut (2) ausgebildet ist, die jeweils halbkreisförmig in Drehrichtung keilförmig ansteigt und in einer abgeschrägten Stufe (3) abfällt oder umgekehrt keilförmig abfällt und in einer abgeschrägten Stufe (3) ansteigt, so daß in der Hohlnut zwei um 180° versetzte gegenüberliegende in gleicher Richtung verlaufende abgeschrägte Stufen (3) angeordnet sind und daß der zweite Teil als eine jeweils halbkreisförmig in Keilform abfallende und in einer abgeschrägten Stufe ansteigende oder umgekehrt verlaufende Erhöhung (5) ausgebildet ist, so daß in der Erhöhung (5) ebenfalls zwei um 180° versetzte gegenüberliegende in gleicher Richtung verlaufende abgeschrägte Stufen ausgebildet sind, wobei die Erhöhungen (5) komplementär zu den hohlnuten (2) angeordnet sind.

2. Etui nach Anspruch 1, dadurch gekennzeichnet, daß die Stufen (3) jeweils ungefähr 5—40° gegen die Senkrechte zur Seitenwand (9, 12) abgeschrägt sind.

3. Etui nach den Ansprüchen 1 und 2, dadurch gekennzeichnet, daß in dem Seitenteil (9), in dem die zur Aufnahme der Gelenkzapfen (1) bestimmten Löcher (4) sitzen, die diesen Zugeordnete konzentrische Erhöhung (5) so ausgebildet ist, daß eine von der Außenkante des Seitenteils nach innen verlaufende als einführschräge dienende Nut (13) auf die Erhöhung (5) gerade auf dem Niveau der Außenseite des Seitenteils trifft und wobei die um die Gelenkzapfen (1) verlaufende Holnut (2) dem Verlauf der Erhöhung (5) angepaßt ist.

**Revendications**

1. Boîtier pouvant être ouvert par relevage d'un couvercle, pour une cassette de bande magnétique, en particulier une cassette dite compacte, constitué d'une partie inférieure (A) ouverte, possédant deux parois latérales (12, 12'), une paroi frontale (10) et un fond (11) qui s'étend seulement sur une partie de la longueur des parois latérales, de sorte que les parois latérales se prolongent librement au-delà du fond, d'une partie supérieure (B) sous la forme d'un couvercle formant une poche, dont les parties ou parois (6, 7, 8, 9, 9') sont réalisées de manière qu'elles forment ensemble avec les parois correspondantes de la partie inférieure un récipient fermé, ainsi que d'une charnière entre la partie inférieure et le couvercle, sous la forme de deux tourillons (1) opposés sur les côtés intérieurs des portions s'étendant librement au-delà du fond des parois latérales de la partie inférieure, et de trous (4) recevoir les tourillons dans les parois latérales coordonnées du couvercle, une pemière partie d'arrêt étant disposée concentriquement autour de chacun des deux tourillons (1) et une deuxième partie d'arrêt étant disposée concentriquement autour de chacun des deux trous (4), parties d'arrêt dont la coopération limite l'angle d'ouverture du couvercle, caractérisé en ce que la première partie d'arrêt est réalisée comme une gorge (2) qui monte à deux reprises suivant un demi-cercle dans le sens de rotation et en forme de coin puis descend par un gradin (3) en biseau ou, inversement, diminue en forme de coin puis monte par un gradin (3) en biseau, si bien que la gorge comporte deux gradins (3) en biseau opposés, mutuellement décalés de 180° et s'étendant dans la même direction, et que la deuxième partie d'arrêt est réalisée comme une élévation (5) qui, à deux reprises, diminue en hauteur suivant un demi-cercle en forme de coin puis monte par un gradin en biseau, ou inversement, si bien que l'élévation (5) comporte également deux gradins en biseau opposés, mutuellement décalés de 180° et s'étendant dans la même direction, les élévations (5) étant agencées de façon complémentaire aux gorges (2).

2. Boîtier selon la revendication 1, caractérisé en ce que le biseau des gradins (3) fait un angle d'environ 5 à 40° avec la normale à la paroi latérale (9, 12).

3. Boîtier selon les revendications 1 et 2, caractérisé en ce que les parties latérales (9) présentant les trous (4) destinés à recevoir les tourillons (1) sont chacune pourvues d'une rainure (13), servant de rampe-guide d'entrée et s'étendant depuis le côté extérieure de la partie latérale considérée vers l'intérieur, et que l'élévation concentrique (5) coordonnée au trou (4) correspondant est réalisée de manière que la rainure (13) rejoigne l'élévation (5) à l'endroit où celle-ci atteint précisément le niveau du côté extérieure de la partie latérale en question, la gorge (2) entourant le tourillon (1) étant adaptée à la configuration de l'élévation (5).

**Claims**

1. Hinged case for holding a magnetic-tape cassette, specifically a compact cassette, consisting of an open lower part (A) having two side walls (12, 12') and a front wall (10) and having a base (11) extending over only part of the length of the side wall, so that the side walls can project out freely beyond the base, and of the upper part (B) in the form of a pocket-like cover, the wall portions (6, 7, 8, 9, 9') thereof being designed in such a way that, in association with the corresponding wall portions of the lower part, they form a closed housing, and a hinge between the lower part and the cover, consisting of two pivot pins (1) disposed opposite one another at the inner faces of the portions of the side walls of the lower part projecting out freely beyond the base, and of holes (4) for holding the pivot pins in the associated side walls of the cover, wherin a first part is provided concentrically around each pivot pin (1) and a second part is provided concentrically around each hole (4), their cooperation defining the angular opening of the cover, characterised in that the first part is in the form of an annular groove (2) rising in semi-circular fashion in the direction of rotation in a wedge-shaped manner and falling in a sloping step (3) or conversely falling in a wedge-shaped manner and rising in a sloping step (3), so that there are two sloping steps (3) extending in the same direction disposed opposite one another and offset by 180° in relation to one another in the annular groove, and that the second part is in the form of a raised portion (5) falling in semi-circular fashion in a wedge shape and rising in a sloping step, or vice versa, so that likewise there are two sloping steps extending in the same direction disposed opposite one another and offset by 180° in relation to one another in the raised portion (5), the raised portions (5) being disposed in such a way that they are complementary to the annular grooves (2).

2. Case according to claim 1, characterised in that the steps (3) each slope at an angle of approximately 5 to 40° in relation to the perpendicular to the side wall (9, 12).

3. Case according to claims 1 and 2, characterised in that the concentric raised portion (5) associated with the side portion (9) having the holes (4) for holding the pivot pin (1) is formed in said side portion in such a way that a groove (13) extending inwardly from the top edge of the side portion and serving as an insertion slope meets the raised portion (5) precisely at the outer face of the side portion, and wherein the annular groove (2) extending around the pivot pin (1) matches the contours of the raised portion (5).

EP 0 198 347 B1

FIG. 1

FIG. 2a

FIG. 2b

EP 0 198 347 B1

FIG. 2c

FIG. 5a

FIG. 5b

FIG. 3

FIG. 4